Europäisches Patentamt

European Patent Office

Office européen des brevets

(11) Publication number: 0 197 464
A1

# (12) EUROPEAN PATENT APPLICATION

(21) Application number: 86104312.3

(22) Date of filing: 27.03.86

(51) Int. Cl.⁴: **G 21 D 9/00**

(30) Priority: 01.04.85 CN 85100044

(43) Date of publication of application:
15.10.86 Bulletin 86/42

(84) Designated Contracting States:
AT DE FR GB

(71) Applicant: Qinghua University
Tshinghua Yuan
Haidian District Beijing(CN)

(72) Inventor: Yingzhong, Lu
Qinghua University, Haidian District
Beijing(CN)

(72) Inventor: Jiafu, Tian
Qinghua University, Haidian District
Beijing(CN)

(72) Inventor: Hongcai, Xiao
Qinghua University, Haidian District
Beijing(CN)

(74) Representative: Lehn, Werner, Dipl.-Ing. et al,
Hoffmann, Eitle & Partner Patentanwälte Arabellastrasse
4 (Sternhaus)
D-8000 München 81(DE)

(54) Deep-pod nuclear reactor for district heating.

(57) The deep-pool nuclear reactor for district heating is a novel type of nuclear reactor technology for district heating purposes. This invention provides a design for a deep-pool reactor with fairly high outlet water temperature which can meet the requirements of medium and small size district heat grids while retaining the simplicity, high inherent safety, and lower economic-scale of pool-type reactors. The depth of the reactor pool (6) is increased to keep the reactor core (14) under static pressure of pool water and the hot water enters the heat exchanger (5) from the bottom (17) to keep high saturation temperature of the reactor outlet (3) cooling water. The advantages of this design include; simplicity in structure, better safety features, lower capital investment, easy operation and maintenance, the possibility of comprehensive utilization, and hence higher economic benefit.

./...

Deep-Pool Nuclear Reactor for District Heating

This invention relates to a novel type of low-temperature reactor for district heating and to the techniques of low-temperature nuclear heat.

Nuclear heat is considered an important new technology in meeting the future energy demand of the world. Three different types of low-temperature heating reactors have been proposed:

1. The pressurized shell-type light water reactor (e.g. the natural circulating slightly-boiling water reactor designs of FRG and USSR in which the reactor cores are installed inside a pressure vessel and the internal structures are much like those of a standard LWR for power generation. (See Об Атомная Теплоснабжении Атомная Энергия, Апрел, 1980, стр. 224-228.

2. The pressurized pool-type light water reactor (e.g. the low pressure PWR design of Sweden in which the reactor core is installed inside a large pool within a PCRV. (See L. Nilsson, M. Hannus "SECURE NUCLEAR DISTRICT HEATING PLANT", Nucl. Techn., Vol. 38)

Both the above two designs are single purpose heating reactors for urban house heating. The economic scale of the above designs will be around 200-500 MW in order to compete with conventional energy sources. Since a 500 MW heating reactor will be able to supply the base load of a heat grid covering some 10 million $m^2$ of buildings, such reactors could only be incorporated in large heat grids in big and medium sized cities. However, many smaller customers, e.g. small cities and towns as well as industrial areas, cannot benefit from such reactors due to high initial investment, which therefore hinders the penetration of such reactors into the heat generator market.

In order to meet the demand of small customers, an open-pool type heating reactor has been developed by Chalk River Lab. of Canada (see AECL-8257, the Canadian Slowpoke Heating Reactor, by J.S. Glen and J.W. Hilborn). The features of such a reactor consist of the installation of the reactor core at the bottom of an open pool. The water heated by the reactor core flows upward under the buoyancy force and enters the heat exchanger near the top of the pool, gives the heat to the secondary loop, and then returns to the bottom of the pool. Natural circulation is thus established. The structure of the reactor is very simple, and the inherent safety is guaranteed. It is reported that the operation cost of a 2 MW design is expected to compete with the oil-fired boiler in the remote regions in Canada.

However, due to the very low outlet temperature (70°C) of the hot water to the heat grid, it could not meet the requirements of ordinary medium and small sized heat grids in many countries, and hence is rather limited in application.

The aim of this invention is to increase the temperature of the outlet hot water to the heat grid as well as benefit by the comprehensive utilization of both heat and radiation, while still retaining the basic advantages of the pool-type reactor, and thus decrease the cost of nuclear heat.

The main features of this invention are:

1.  An increase in the depth of the pool and maintenance of the water level to at least 10-40 meters above the upper edge of the reactor core, thus increasing the outlet temperature of reactor cooling water while avoiding boiling at the core.

2.  In order to prevent boiling after leaving the core, the 1st loop hot water enters the heat exchanger from the bottom and flows upward inside the heat exchanger, and the cooled 1st loop water leaves the heat exchanger near the top of the pool (contrary to the Canadian design, etc.) and natural circulation is established as well.

3.  The buoyancy force is increased due to the increased depth of the pool, and is not influenced by the reverse direction of 1st loop water flow in the heat exchanger. A circulation pump may be added to the natural circulation circuit to enhance heat transfer and hence reduce the size and capital investment of heat exchangers and other equipment inside the pool. The power consumption of such a pump is rather low compared with other designs.

4.  The open-pool arrangement facilitates the installation of irradiation channels as well as a radiation loop in which the activated material can be circulated outside the reactor in a separate irradiation facility.

5.  The scope of utilization of low temperature nuclear heat can be extended to include not only house heating in cold seasons and the supply of domestic hot water, but also air-conditioning in hot seasons and power generation when necessary.

There is practically no limitation on the depth of the pool, and the estimated outlet hot water temperatures from the 2nd loop to the heat grid against the depths of the pool are listed in the following table as examples.

| Depth of Water (Meters) Above the Upper Edge of Core | 15 | 20 | 30 | 40 |
|---|---|---|---|---|
| Temperature of Hot Water Entering the Heat Grid ($^{O}$C) | 80-85 | 85-93 | 93-102 | 103-110 |

The advantages of this invention over the existing alternative designs are:

1. All the basic advantages of the pool-type reactor are retained, i.e. the simplicity in reactor structure, the inherent safety, the low capital cost and the convenience of operation and maintenance.

2. An increase in the outlet temperature of hot water to the heat grid, thus meeting the requirements of many medium and small heat grids. The output power of the reactor will no longer be restricted by the exceptionally low temperature of the original open-pool type design, with the result that the generated heat becomes more economically viable.

3. The easy application and comprehensive utilization of both heat and irradiation with an open-pool design substantially increases the economic benefit of nuclear heat reactors and thus promotes their penetration into the heat generator market.

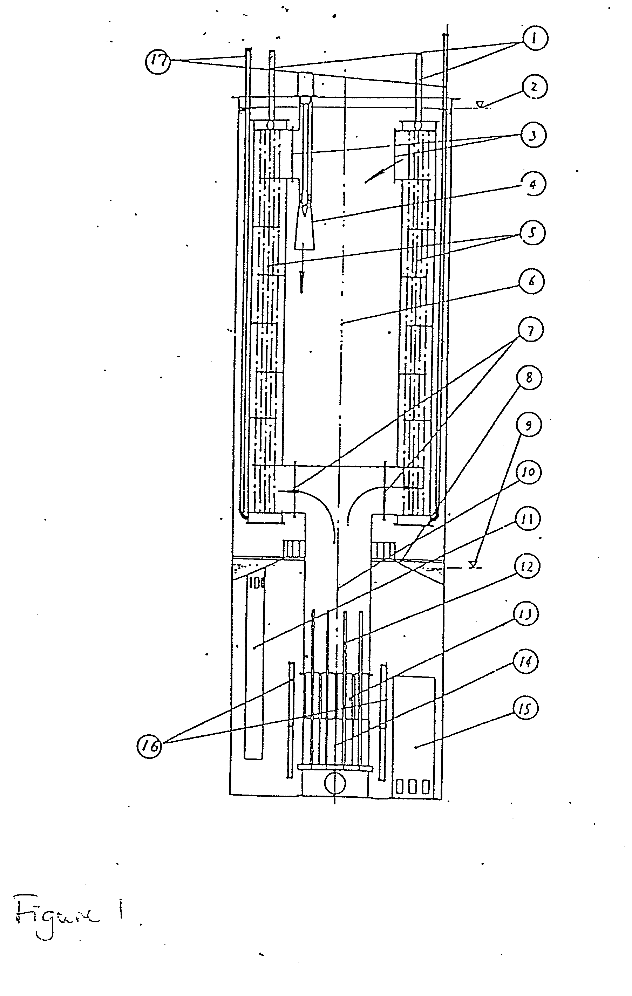

An example of the application of such an invention is shown in the attached figure (Fig. 1) of a 20-100 MW deep-pool heat reactor design (supplying the district heat needed by some 0.4-2 million square meters of buildings). The reactor core 14 is installed at the bottom of a large pool 6, in which hydraulically-driven control rods 12 and 13 are inserted (also with electromechanical control drive when the depth of water permits). The 1st loop water heated by the core flows upward through the duct 10 by means of the buoyancy force into the inlet 17 at tne bottom of heat exchanger 5. The heat is transferred to 2nd cooling water (e.g. through tubebanks as shown with dotted lines), and then the 1st loop cooling water returns to the pool through the outlet 3 at the top of the heat exchanger. A circulation pump 4 may be installed as desired to enhance the output of the reactor. The 2nd loop cooling water enters the heat exchanger from the top 1 and passes through the heat transfer surfaces 5 and leaves the heat exchanger from the bottom 17, and then carries the heat to a 3rd loop (i.e. the heat grid, not shown in the figure). The pressure of 2nd loop is kept higher than tnat of both 1st and 3rd loops to guarantee the radioactive 1st loop water will not leak into the 3rd loop under any circumstances. A platform for maintenance 8 is also shown in. the figure, and the maintainance and refueling work can be carried out easily after lowering the water level from the operation level 2 to maintenance level 9. At the same time, the residue heat of the core will be dissipated by the residue-heat exchanger 11. The spent fuel may be temporarily stored in the spent fuel storage cage 15. Irradiation channels and loop 16 may be installed inside the reactor as a result of the open-pool arrangement. The simplicity in structure and the convenience of operation and maintenance are easily seen from this figure.

Another example of the extended application of this invention is:

A deep-pool type reactor of 5 MW is designed, the water level being 15 meters above the upper edge of the reactor core. The heat exchangers are 7 meters high. The hot water supply (85°C, from 20°C feed water) is 60 tons/hr in winter, and the refrigeration capability for air-conditioning in summer with LiBr absorption refrigerator is 6 Gcal/hr at 7-12°C chilling water temperature. A saving of power equivalent to 0.45 million yuan RMB is estimated in comparison with a conventional vapor compressor air-conditioning unit, based on an annual availability of 4300 hr. In addition, an irradiation loop is designed in this reactor which can provide a radiation source equivalent to 200,000 Ci (Co) in a separate irradiation facility. Both the technologies of refrigeration and irradiation themselves are either conventional or separately developed technologies not included in this invention.

It will be understood that the invention is not to be limited to the details given herein but that it may be modified within the scope of the appended claims.

Claims:

1.   A pool type reactor with the reactor core (14) at the bottom of the pool (6) and the heat exchangers (5) inside said pool, characterized in that the depth of water in said pool is at least 10 meters above the upper edge of said reactor core, and natural-circulation is employed to circulate the cooling water in the 1st loop through said reactor core (14) and said heat exchangers (5) , and the inlet of 1st loop cooling water to the said heat exchangers is at the lowest end of the said heat exchanger so that the 1st loop cooling water will enter the said heat exchanger with sufficient static pressure of the said deep pool water.

2.   A pool type reactor according to claim 1, characterized in that an irradiation loop (16) is installed in the heating reactor.

3.   A pool type reactor according to claims 1 and 2, characterized in that the hot water produced in the heating reactor is utilized for refrigeration and power generation.

4.   A pool type reactor according to any one of claims 1 to 3, characterized in that the pressure of the 2nd loop is kept higher than that of both the 1st and 3rd loops.

0197464

Figure 1

**European Patent Office**

## EUROPEAN SEARCH REPORT

Application number

EP 86 10 4312

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 393 127 (R. DETMAN et al.) <br> * Column 2, lines 1-10; column 4, lines 60-64; column 5, lines 17-25; figures * | 1 | G 21 D 9/00 |
| | --- | | |
| Y | NUCLEAR ENGINEERING INERNATIONAL, vol. 27, no. 328, June 1982, pages 29-30, Sutton, Surrey, GB; "Study on small heating reactor shows promise" <br> * Page 30, schematic view * | 1 | |
| | --- | | |
| A | US-A-3 378 448 (J. HUMPHRIES) <br> * Column 4, lines 54-64; figure 4 * | 2 | |
| | --- | | TECHNICAL FIELDS SEARCHED (Int. Cl.4) |
| A | NUCLEAR ENERGY, vol. 22, no. 4, August 1983, pages 251-259, London, GB; J. HULST: "Nuclear district heating-technical and economic aspects of the introduction of a nuclear reactor in a district heating network" <br> * Page 251, right-hand column; figure 4 * | 1,3 | G 21 D 9/00 <br> G 21 C 1/00 |
| | ---      -/- | | |

The present search report has been drawn up for all claims

| Place of search | Date of completion of the search | Examiner |
|---|---|---|
| THE HAGUE | 23-06-1986 | ERRANI C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl.4) |
| A | REVUE GENERALE DE THERMIQUE, vol. 17, no. 200/201, August/September 1978, pages 718-720; Note d'information du commissariat à l'energie atomique: "Les centrales nucléaires calogènes: le projet thermos" * Figure 1 * | 1,4 | |
| A | IEEE SPECTRUM, vol. 21, no. 2, February 1984, pages 50-55, IEEE, New York, US; "Low-temperature reactors for space heating" | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 23-06-1986 | ERRANI C. |